# DEMANDE DE BREVET EUROPEEN

(11) **EP 0 521 746 A1**
(43) Date de publication de la demande: **07.01.1993**
(21) Numéro de dépôt: 92401649.6
(22) Date de dépôt: 15.06.1992
(51) Int. Cl.: H01Q 1/08, H01Q 1/00, F16B 39/28, F16B 39/284

(54) **Dispositif de fixation d'une antenne, notamment pour poste autoradio, sur un corps d'antenne**

(30) Priorité: 02.07.1991 FR 9108236
(71) Demandeur: MECANIPLAST, F-92110 Clichy (FR)
(72) Inventeur: Caillot, Raymond, F-77165 Saint Soupplets (FR)
(74) Mandataire: Peuscet, Jacques

(57) **Abrégé**

Le dispositif de fixation d'une antenne comprend, sur l'un des deux éléments constitués par l'antenne (1) et le corps d'antenne (4), une vis (9), et, sur l'autre élément, un trou taraudé (7) avec lequel la vis est destinée à coopérer, et des moyens de freinage (F) prévus sur des enveloppes isolantes (3, 8) entourant respectivement l'antenne et le corps d'antenne. L'enveloppe isolante d'antenne (3) comporte une bague interne (10) entourée, à distance radiale, par une jupe (11) ; les moyens de freinage, du côté de l'antenne, sont prévus sur cette bague interne (10) de sorte que la jupe (11) qui masque totalement la bague de freinage (10), n'est pas soumise aux contraintes mécaniques de freinage.

## Description

L'invention est relative à un dispositif de fixation d'une antenne, notamment pour poste autoradio, sur un corps d'antenne monté sur un support, en particulier une partie de carrosserie de véhicule, ce dispositif de fixation étant du genre de ceux qui comprennent, sur l'un des deux éléments constitués par l'antenne et le corps d'antenne, une vis, et, sur l'autre élément, un trou taraudé avec lequel la vis est destinée à coopérer, et des moyens de freinage prévus sur des enveloppes isolantes entourant respectivement l'antenne et le corps d'antenne, ces moyens de freinage étant propres à coopérer en fin de vissage de l'antenne sur le corps, et à s'opposer à un dévissage accidentel et donc à la perte du fouet d'antenne.

Dans un tel dispositif de fixation, la présence de moyens de freinage est très utile car, en raison des vibrations auxquelles un tel dispositif peut être soumis, en particulier dans le cas d'une antenne de poste autoradio, un dévissage a tendance à se produire en l'absence de moyens de freinage efficaces de sorte que la qualité du contact électrique entre l'antenne et le corps d'antenne diminue, ce qui provoque des crachements perceptibles dans le poste.

Toutefois, les régions des enveloppes isolantes, généralement en matière plastique, de l'antenne et du corps d'antenne équipées des moyens de freinage sont soumises à des sollicitations mécaniques relativement importantes, pouvant provoquer des dégradations locales de l'enveloppe isolante, ce qui, sur le plan esthétique, n'est pas souhaitable et, sur le plan technique, conduit à une moindre efficacité de la protection assurée par l'enveloppe isolante. Si, pour éviter de telles dégradations, on réduit les contraintes mécaniques de serrage auxquelles sont soumis les moyens de freinage, il en résulte une moindre efficacité de ces moyens de freinage à l'encontre d'un dévissage fortuit.

L'invention a pour but, surtout, de fournir un dispositif de fixation d'antenne du genre défini précédemment, dans lequel les moyens de freinage conservent leur efficacité sans qu'il en résulte des inconvénients sur le plan esthétique et/ou sur le plan de la protection assurée par les enveloppes isolantes. Il est souhaitable en outre que ce dispositif reste d'une fabrication simple et économique.

Selon l'invention, un dispositif de fixation d'une antenne, notamment pour poste autoradio, sur un corps d'antenne monté sur un support, en particulier une partie de carrosserie de véhicule, du genre défini précédemment, est caractérisé par le fait que l'enveloppe isolante d'antenne comporte une bague interne entourée, à distance radiale, par une jupe, et que les moyens de freinage, du côté de l'antenne, sont prévus sur cette bague interne, de sorte que la jupe qui masque totalement la bague de freinage, n'est pas soumise aux contraintes mécaniques du freinage.

La jupe a, de préférence, une forme tronconique s'écartant radialement de la bague en direction du corps d'antenne.

Avantageusement, la bague interne de l'enveloppe isolante d'antenne présente une certaine élasticité dans le sens radial, et les moyens de freinage comprennent, du côté du corps d'antenne, un manchon propre à s'engager dans la bague interne de l'antenne.

Le diamètre intérieur de la bague interne peut être légèrement inférieur au diamètre extérieur du manchon de telle sorte que l'engagement du manchon dans la bague interne s'effectue avec un serrage radial provoquant une déformation de la surface extérieure de la bague.

Selon une autre possibilité, l'une des deux pièces constituées par la bague interne et le manchon comportent des nervures en saillie radiale, parallèles à l'axe, tandis que l'autre pièce comporte des rainures dans lesquelles sont propres à s'engager les susdites nervures, le franchissement par les nervures des rainures successives lors du vissage étant obtenu par déformation élastique de la bague interne.

De préférence, les susdites nervures axiales sont prévues sur la surface intérieure de la bague interne, présentant une certaine élasticité, tandis que les rainures sont prévues sur la surface extérieure du manchon du corps d'antenne.

Selon une autre possibilité, les moyens de freinage comprennent, du côté de l'enveloppe d'antenne, des fentes longitudinales séparant la bague interne en pattes espacées régulièrement suivant la direction périphérique et présentant une certaine élasticité, chaque patte étant munie, vers l'intérieur, d'au moins une nervure parallèle à la direction axiale. Les pattes peuvent être sollicitées élastiquement, radialement vers l'intérieur, par des moyens élastiques tels qu'une ceinture élastique métallique ou en élastomère enserrant les pattes.

Selon une autre possibilité, la bague interne de l'enveloppe isolante d'antenne est munie intérieurement d'un bourrelet périphérique formant anneau d'encliquetage tandis que le manchon prévu sur le corps d'antenne est muni, en bout, d'une nervure périphérique délimitant, derrière elle, une gorge propre à recevoir l'anneau de la bague, l'encliquetage de la bague sur le manchon s'effectuant avec un serrage radial assurant le freinage.

Une ceinture élastique métallique ou en matière élastomère peut être prévue pour contraindre radialement extérieurement la bague et l'appliquer contre le manchon.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

La figure 1, de ces dessins, est une vue de côté de la partie inférieure d'une antenne fixée sur un support par un dispositif de fixation selon l'invention.

La figure 2 est une coupe axiale, à plus grande échelle, de la partie inférieure de l'antenne et du support d'antenne avant assemblage.

La figure 3 montre en extérieur, avec parties arrachées, l'antenne fixée sur le support.

La figure 4 montre en extérieur, avec parties arrachées, une variante du dispositif de fixation d'antenne selon l'invention.

La figure 5 est une coupe suivant la ligne V-V, figure 4.

La figure 6 est une vue d'extrémité, semblable à la figure 5, d'un autre exemple de réalisation.

La figure 7, enfin, est une vue de côté avec parties arrachées d'un autre exemple de réalisation du dispositif de fixation selon l'invention, l'antenne étant fixée sur le support.

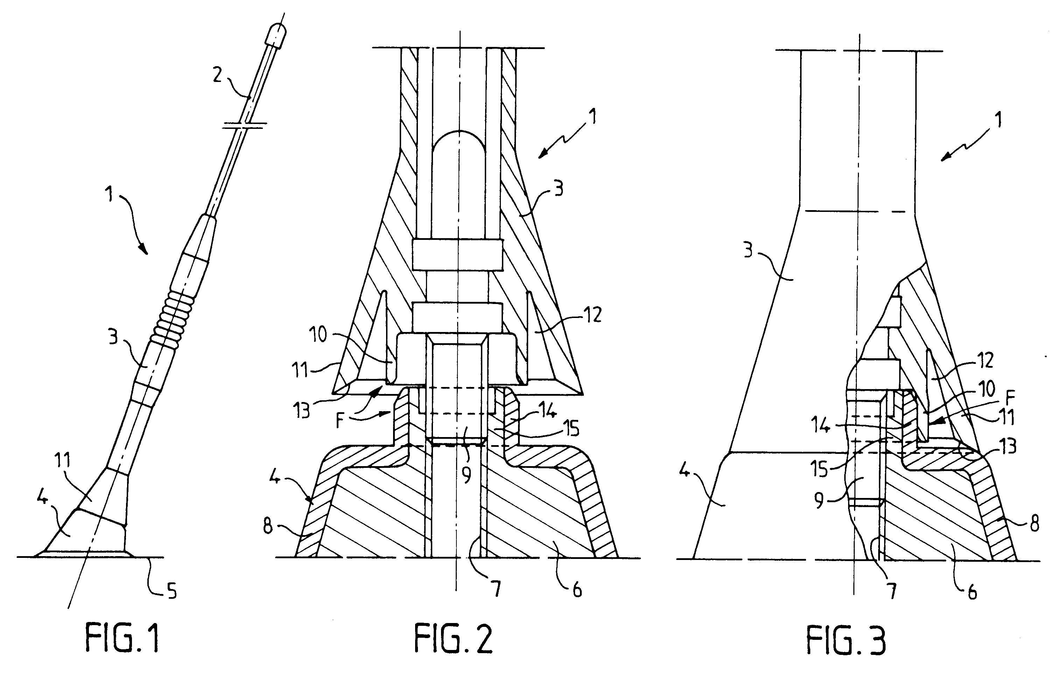

En se reportant à la figure 1, on peut voir une antenne 1 pour poste autoradio comportant un brin d'antenne 2 en matière conductrice de l'électricité entouré, en partie basse, par une enveloppe 3 isolante, généralement en matière plastique. L'antenne 1 est fixée sur un corps d'antenne 4 monté sur un support constitué, dans l'exemple considéré, par une partie 5 de carrosserie de véhicule automobile. Comme visible sur la figure 2, le corps d'antenne comprend un noyau métallique 6 dans lequel est prévu un trou taraudé 7. Le noyau 6 est entouré par une enveloppe 8 isolante, notamment en matière plastique.

L'antenne comporte, à sa partie inférieure, une vis 9, disposée axialement, propre à coopérer avec le trou taraudé 7 pour assurer la fixation de l'antenne sur le corps.

Des moyens de freinage F sont prévus sur les enveloppes isolantes 3 et 8 pour coopérer en fin de vissage de l'antenne 1 sur le corps 4 et pour s'opposer à un dévissage.

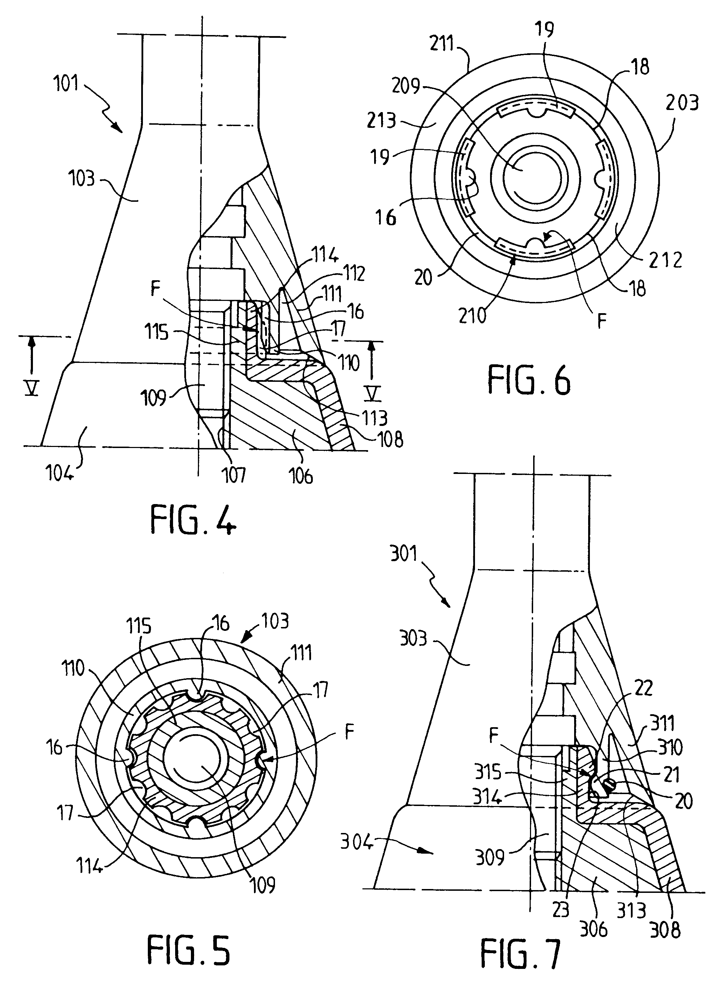

L'enveloppe isolante 3 de l'antenne comprend une bague interne 10 de forme générale cylindrique coaxiale à l'antenne, et présentant une certaine élasticité dans le sens radial. Le contour circulaire de la section tranversale de la bague 10 peut être continu, ce qui correspond à l'exemple de réalisation des figures 2 et 3, ou être interrompu par des fentes longitudinales ce qui correspond à la solution de la figure 6 selon laquelle la bague est en quelque sorte formée par un ensemble de pattes longitudinales séparées par des fentes.

La bague 10 est entourée, à distance radiale, par une jupe 11 faisant partie intégrante de l'enveloppe 3. La jupe 11 est tronconique et augmente de diamètre progressivement en direction du corps 4 de telle sorte que la dimension radiale de l'espace libre 12 existant entre la bague 10 et la jupe 11 augmente progressivement vers le corps 4, alors qu'à son extrémité opposée, l'espace 12 se termine à la jonction de la jupe 11 et de la bague 10. Le bord 13 de la jupe 11 tourné vers le corps 4 est chanfreiné et peut s'appliquer de manière pratiquement étanche contre l'enveloppe 8 du corps 4.

Du côté de ce corps d'antenne 4, les moyens de freinage F comprennent un manchon 14 faisant partie de l'enveloppe isolante 8, et tourné vers l'antenne 1. Le manchon 14 entoure l'extrémité du noyau métallique 6 agencée sous forme d'un cylindre 15 dans lequel est prévu le trou taraudé 7.

Dans l'exemple de réalisation des figures 2 et 3, la surface extérieure du manchon 14 est lisse, de même que la surface intérieure de la bague 10.

Le diamètre intérieur de cette bague 10 est légèrement inférieur au diamètre extérieur du manchon 14 de telle sorte que l'engagement du manchon 14 dans la bague 10 s'effectue avec un serrage radial suffisant pour assurer un freinage efficace. Ce serrage provoque une déformation de la surface extérieure de la bague 10, comme visible sur la figure 3.

Du fait de la présence de la jupe 11, la bague interne 10 déformée n'est pas visible. En outre, l'appui du bord 13 contre l'enveloppe 8 du corps d'antenne est assuré dans de bonnes conditions, sans que les contraintes mécaniques imposées par le freinage n'interfèrent à ce niveau.

Les figures 4 et 5 illustrent une variante de réalisation dans laquelle la bague 110 comporte, sur sa surface interne, des nervures 16 en saillie radialement vers l'intérieur, parallèles à l'axe, tandis que le manchon 114 du support d'antenne comporte des rainures complémentaires 17 prévues sur sa surface extérieure.

Dans l'exemple considéré, les nervures 16 sont au nombre de quatre, régulièrement espacées de 90° ; leur section tranversale est semi-circulaire. Les rainures longitudinales 17 ont une section transversale semi-circulaire concave, conjuguée de la section convexe des nervures 16. Le nombre des rainures 17 est plus important, par exemple égal à douze, les rainures étant régulièrement espacées, d'un angle au centre de 30° dans l'exemple considéré.

Les autres éléments du dispositif de fixation des figures 4 et 5, semblables à des éléments des figures 2 et 3, sont désignés par des références numériques égales à la somme du nombre 100 et des références utilisées à propos des figures précédentes, sans que leur description soit reprise.

Lors du vissage ou du dévissage de l'antenne sur le corps d'antenne, le franchissement des bords des rainures 17 par les nervures 16 est obtenu grâce à la déformation élastique de la bague 110 dont la section transversale, comme visible sur la figure 5, a un contour circulaire continu. Cette bague 110 reste masquée par la jupe 111.

La figure 6 illustre une autre variante de réalisation du dispositif de fixation selon laquelle la bague 210 présente, en section transversale, un contour circulaire interrompu par des fentes longitudinales 18, au nombre de quatre régulièrement espacées dans l'exemple considéré. La bague 210 est alors formée par un ensemble de quatre pattes longitudinales 19. Les nervures longitudinales 16 sont prévues au milieu de chaque patte 19 sur sa surface interne. Ces pattes 19, solidaires au niveau de leur base de l'enveloppe isolante 203 de l'antenne présentent une élasticité radiale. Le manchon (non représenté sur la figure 6) prévu sur le corps d'antenne, est semblable à celui des figures 4 et 5.

Les autres éléments de la figure 6 semblables à des éléments déjà décrits précédemment à propos des figures 2 et 3 sont désignés par des références numériques égales à la somme du nombre 200 de la référence utilisée sur les figures 2 et 3, sans que leur description soit reprise.

Avantageusement, une ceinture ou un cordon élastique 20 enserre extérieurement les pattes 19. Cette ceinture 20 est engagée, par exemple, dans une rainure périphérique prévue sur la surface extérieure de la patte 19 au voisinage de son extrémité tournée vers le manchon du corps d'antenne. Les pattes 19 sont ainsi sollicitées élastiquement pour serrer le manchon du corps d'antenne. La ceinture élastique 20 peut être métallique ou réalisée en matière élastomère.

La jupe tronconique 211 recouvre les pattes 19 et est seule visible de l'extérieur.

La figure 7 illustre une variante de réalisation dans laquelle la bague interne 310 de l'enveloppe isolante 303 d'antenne est munie intérieurement, à son extrémité tournée vers le corps d'antenne, d'un bourrelet périphérique 21, formant anneau d'encliquetage, faisant saillie radialement vers l'intérieur.

Du côté du corps d'antenne, le manchon 314 est muni en bout, extérieurement, d'un bourrelet périphérique 22 délimitant, en arrière, une gorge 23 propre à recevoir le bourrelet 21 de la bague qui s'applique avec serrage contre la surface arrière du bourrelet 22.

La bague 310, qui présente une certaine élasticité, peut avoir un contour circulaire continu, ou comporter des fentes déterminant des pattes longitudinales. Dans ce dernier cas, la bague 310 est avantageusement entourée par une ceinture élastique 20 semblable à celle de la figure 6.

Quelle que soit la réalisation adoptée, le dispositif de fixation d'antenne conforme à l'invention comporte des moyens de freinage F efficaces dont les déformations éventuelles, imposées par les contraintes mécaniques du freinage, ne viennent pas altérer l'aspect extérieur de l'enveloppe isolante 3, au niveau de la jupe 11, 111, 211, 311. Cette jupe en venant en appui contre l'enveloppe du corps d'antenne par son bord chanfreiné assure une étanchéité satisfaisante au niveau de cette jonction.

## Revendications

1. Dispositif de fixation d'une antenne, notamment pour poste autoradio, sur un corps d'antenne monté sur un support, en particulier une partie de carrosserie de véhicule, comprenant, sur l'un des deux éléments constitué par l'antenne et le corps d'antenne, une vis, et, sur l'autre élément, un trou taraudé avec lequel la vis est destinée à coopérer, des moyens de freinage étant prévus sur des enveloppes isolantes entourant respectivement l'antenne et le corps d'antenne, ces moyens de freinage étant propres à coopérer en fin de vissage de l'antenne sur le corps, et à s'opposer à un dévissage, caractérisé par le fait que, du côté de l'antenne, l'enveloppe isolante d'antenne (3, 103, 203, 303) comprend une bague interne (10, 110, 210, 310), cette bague étant entourée, à distance radiale, par une jupe (11, 111, 211, 311), et que les moyens de freinage, du côté de l'antenne, sont prévus sur cette bague interne, de sorte que la jupe qui masque totalement la bague de freinage, n'est pas soumise aux contraintes mécaniques du freinage.

2. Dispositif selon la revendication 1, caractérisé par le fait que la jupe (11, 111, 211, 311) a une forme tronconique s'écartant radialement de la bague (10, 110, 210, 310) en direction du corps d'antenne.

3. Dispositif selon la revendication 1 ou 2, caractérisé par le fait que la bague (10, 110, 210, 310) interne présente une certaine élasticité dans le sens radial, et que les moyens de freinage (F) comprennent, du côté du corps d'antenne, un manchon (14, 114, 314) propre à s'engager dans la bague interne de l'antenne.

4. Dispositif selon la revendication 3, caractérisé par le fait que le diamètre intérieure de la bague interne (10) est légèrement inférieur au diamètre extérieur du manchon (14), de telle sorte que l'engagement du manchon (14) dans la bague interne (10) s'effectue avec un serrage radial provoquant une déformation de la surface extérieure de la bague.

5. Dispositif selon la revendication 1 ou 2, caractérisé par le fait que l'une des deux pièces constituées par la bague interne (110, 210) et le manchon (114) comporte des nervures (16) en saillie radiale, parallèles à l'axe, tandis que l'autre pièce comporte des rainures (17) dans lesquelles sont propres à s'engager les susdites nervures, le franchissement, par les nervures, des bords des rainures, lors du vissage, étant obtenu par déformation élastique de la bague interne (110, 210).

6. Dispositif selon la revendication 5, caractérisé par le fait que les nervures axiales (16) sont prévues sur la surface intérieure de la bague interne (110, 210) tandis que les rainures (17) sont prévues sur la surface extérieure du manchon (114) du corps d'antenne.

7. Dispositif selon la revendication 1 ou 2, caractérisé par le fait que les moyens de freinage (F) comprennent, du côté de l'enveloppe (211) d'antenne, des fentes longitudinales (18) séparant la bague interne (210) en pattes (19) espacées régulièrement suivant la direction périphérique et présentant une certaine élasticité, chaque patte (19) étant munie, vers l'intérieur, d'au moins une nervure (16) parallèle à la direction axiale.

8. Dispositif selon la revendication 7, caractérisé par le fait que les pattes (19) sont sollicitées élastiquement, radialement vers l'intérieur, par des moyens élastiques tels qu'une ceinture élastique (20), métallique ou en élastomère, enserrant les pattes (19).

9. Dispositif selon la revendication 1 ou 2, caractérisé par le fait que la bague interne (310) de l'enveloppe isolante (311) d'antenne, est munie intérieurement d'un bourrelet périphérique (21) formant anneau d'encliquetage, tandis que le manchon (314) prévu sur le corps d'antenne (304) est muni, en bout, d'une nervure (22) périphérique délimitant, derrière elle, une gorge (23) propre à recevoir l'anneau de la bague, l'encliquetage de la bague sur le manchon s'effectuant avec un serrage radial assurant le freinage.
